(19) Europäisches Patentamt / European Patent Office / Office européen des brevets

(11) **EP 3 318 761 B1**

(12) **FASCICULE DE BREVET EUROPEEN**

(45) Date de publication et mention
de la délivrance du brevet:
**07.11.2018 Bulletin 2018/45**

(51) Int Cl.:
**F04D 13/12** *(2006.01)*  **F04D 15/00** *(2006.01)*
**F04D 13/06** *(2006.01)*  F04D 15/02 *(2006.01)*

(21) Numéro de dépôt: **17193842.6**

(22) Date de dépôt: **28.09.2017**

(54) **Procédé et système de commande d'un équipement multi-pompes**

Steuerverfahren und -system einer Mehrfachpumpenanordnung

Method and systems for controlling a mutli-pump system

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **08.11.2016 FR 1660760**

(43) Date de publication de la demande:
**09.05.2018 Bulletin 2018/19**

(73) Titulaire: **Schneider Toshiba Inverter Europe SAS
27120 Pacy sur Eure (FR)**

(72) Inventeur: **Coin, Sylvain
27220 Bretagnolles (FR)**

(74) Mandataire: **Dufresne, Thierry
Schneider Electric Industries SAS
Service Propriété Industrielle
35 rue Joseph Monier
92500 Rueil-Malmaison (FR)**

(56) Documents cités:
**EP-A1- 0 735 273    EP-A1- 2 743 507
WO-A1-2015/105832**

**Description**

**Domaine technique de l'invention**

La présente invention se rapporte à un procédé et un système de commande d'un équipement multi-pompes.

**Etat de la technique**

Un équipement multi-pompes comporte au moins deux pompes, chaque pompe étant commandée par un variateur de vitesse pour fournir un débit ou une pression déterminée. Dans l'équipement multi-pompes, les pompes sont connectées en parallèle à un même conduit d'entrée et leurs sorties se rejoignent dans un conduit de sortie commun. Pour une consigne globale, les pompes de l'équipement sont commandées de manière indépendante. La vitesse demandée à chaque pompe et le nombre de pompes activés sont fonction de la consigne globale et éventuellement de divers paramètres ou contraintes d'entrée, telles que par exemple des contraintes d'économie d'énergie électrique. Ainsi, on comprend que, pour une même consigne globale, le nombre de pompes activées et la vitesse demandée à chaque pompe peuvent varier.

Les demandes de brevet référencés EP0735273A1, WO2015/105832A1 et EP2743507A1 décrivent des solutions de commande d'un équipement multi-pompes.

Dans certaines applications comme la commande d'installation de chauffage/ventilation/climatisation (HVAC), il est avantageux de contrôler la différence de pression entre l'entrée et la sortie de l'équipement multi-pompes employé en fonction du débit demandé. Pour cela, le plus simple est d'employer des capteurs de pression et de débit.

Cependant, pour différentes raisons, notamment de coût, d'entretien, de facilité d'installation, il est intéressant de se passer de capteurs de pression et de débit et de proposer des solutions de contrôle d'un équipement multi-pompes sans capteur (solutions dites "sensorless").

Les solutions sans capteur sont en règle générale basées sur le contrôle de la hauteur manométrique. Dans ces solutions sans capteur, même avec une consigne globale constante et des pompes toutes identiques, il se produit cependant des discontinuités dans le débit. Les raisons de ces discontinuités sont diverses :

- Une première raison est liée au nombre variable de pompes que l'équipement peut activer pour une même consigne. Autrement dit, pour une même consigne, l'équipement pourra choisir d'activer plus ou moins de pompes, d'en actionner certaines et d'en arrêter d'autres lors du processus de pompage.
- Une deuxième raison est liée à des déséquilibres entre les pompes de l'équipement. Deux pompes identiques, avec une même consigne, ne produiront pas forcément le même débit en sortie.

Le but de l'invention est donc de proposer un procédé de commande d'un équipement multi-pompes, qui puissent résoudre les inconvénients de l'art antérieur, en s'affranchissant des problèmes de déséquilibre entre les pompes et de la stratégie de commande individuelle des pompes de l'équipement.

**Exposé de l'invention**

Ce but est atteint par un procédé de commande d'un équipement multi-pompes destiné à pomper un fluide, ledit équipement comportant n cellules de pompage reliées en parallèle, avec n supérieur ou égal à 2, et comprenant chacune une entrée, une sortie et une pompe connectée entre l'entrée et la sortie, au moins un point de jonction d'entrée relié à chaque entrée des cellules de pompage et au moins un point de jonction de sortie relié à chaque sortie des cellules de pompage, ledit équipement étant contrôlé à partir d'une consigne en différentiel de pression entre ledit point de jonction d'entrée et ledit point de jonction de sortie, ledit procédé consistant à :

- Déterminer par estimation un différentiel de pression estimé généré par chaque cellule de pompage entre son entrée et sa sortie en tenant compte d'une valeur de correction, par exemple quadratique, représentative des pertes de charge dans la cellule de pompage,
- Déterminer par estimation un différentiel de pression de l'équipement multi-pompes à partir des différentiels de pression estimés pour chaque cellule de pompage,
- Comparer ledit différentiel de pression estimé de l'équipement multi-pompes audit différentiel de pression de consigne en vue de contrôler une vitesse de référence à injecter dans une boucle de contrôle de l'équipement multi-pompes.

Selon une particularité, pour chaque cellule de pompage, il comporte une étape de détermination du débit estimé de la pompe à partir d'une puissance mécanique estimée de la pompe et d'une courbe de pompe de type PQ à une vitesse estimée de la pompe.

Selon une autre particularité, le procédé comporte, pour chaque cellule de pompage, une étape de détermination d'une hauteur manométrique estimée à partir du débit estimé et d'une courbe de pompe de type HQ à une vitesse estimée de la pompe.

Selon une autre particularité, pour chaque cellule de pompage, le différentiel de pression estimé de la cellule de pompage est déterminé à partir de la hauteur manométrique estimée et de ladite valeur de correction.

Selon un mode de réalisation particulier, le procédé comporte une étape de correction du différentiel de pression de consigne à l'aide d'un coefficient de compensation quadratique.

Selon un premier mode de réalisation, le procédé comporte une étape initiale d'apprentissage mise en oeuvre pour déterminer la valeur de correction quadratique, représentative des pertes de charge dans la cellule de pompage, ladite étape initiale d'apprentissage consistant à :

- Actionner chaque pompe de l'équipement de manière individuelle à un débit de consigne individuel déterminé,
- Actionner au moins deux par deux, des pompes de l'équipement à un débit de consigne total identique audit débit de consigne individuel,
- Déterminer un coefficient de compensation des pertes de charge pour chaque cellule de pompage,
- Déterminer la valeur de correction à partir du coefficient de compensation des pertes de charge.

Selon un deuxième mode de réalisation, la valeur de correction quadratique est déterminée de manière théorique à partir de la hauteur manométrique équivalente aux pertes de charge de la cellule de pompage de l'équipement à un débit donné.

L'invention concerne également un système de commande d'un équipement multi-pompes destiné à pomper un fluide, ledit équipement comportant n cellules de pompage reliées en parallèle, avec n supérieur ou égal à 2, et comprenant chacune une entrée, une sortie et une pompe connectée entre l'entrée et la sortie, au moins un point de jonction d'entrée relié à chaque entrée des cellules de pompage et un point de jonction de sortie relié à chaque sortie des cellules de pompage, ledit équipement étant contrôlé à partir d'une consigne en différentiel de pression entre ledit point de jonction d'entrée et ledit point de jonction de sortie, ledit système comportant :

- Un module de détermination par estimation d'un différentiel de pression estimé généré par chaque cellule de pompage entre son entrée et sa sortie en tenant compte d'une valeur de correction représentative des pertes de charge dans la cellule de pompage,
- Un module de détermination d'un différentiel de pression de l'équipement multi-pompes à partir des différentiels de pression estimés pour chaque cellule de pompage,
- Un module de comparaison dudit différentiel de pression estimé de l'équipement multi-pompes audit différentiel de pression de consigne en vue de contrôler une vitesse de référence à injecter dans une boucle de contrôle de l'équipement multi-pompes.

Selon une particularité, pour chaque cellule de pompage, le système comporte un bloc d'estimation du débit estimé de la pompe à partir d'une puissance mécanique estimée de la pompe et d'une courbe de pompe de type PQ à une vitesse estimée de la pompe.

Selon une autre particularité, le système comporte, pour chaque cellule de pompage, un bloc d'estimation d'une hauteur manométrique estimée à partir du débit estimé et d'une courbe de pompe de type HQ à une vitesse estimée de la pompe.

Selon une autre particularité, pour chaque cellule de pompage, le système comporte un bloc d'estimation du différentiel de pression estimé de la cellule de pompage est déterminé à partir de la hauteur manométrique estimée et de ladite valeur de correction.

Selon un mode de réalisation particulier, le système comporte un bloc de correction du différentiel de pression de consigne à l'aide d'un coefficient de compensation quadratique.

Selon un premier mode de réalisation, le système comporte un module d'apprentissage exécuté pour déterminer la valeur de correction, ledit module comportant :

- Un module de commande de chaque pompe de l'équipement de manière individuelle à un débit de consigne individuel déterminé,
- Un module de commande au moins deux par deux, des pompes de l'équipement à un débit de consigne total identique audit débit de consigne individuel,
- Un module de détermination d'un coefficient de compensation des pertes de charge pour chaque cellule de pompage,
- Un module de détermination de la valeur de correction à partir du coefficient de compensation des pertes de charge.

Selon un deuxième mode de réalisation, le système comporte un module de détermination de la valeur de correction à partir de la hauteur manométrique équivalente aux pertes de charge de la cellule de pompage de l'équipement à un débit donné.

**Brève description des figures**

D'autres caractéristiques et avantages vont apparaître dans la description détaillée qui suit faite en regard des dessins annexés dans lesquels :

- La figure 1 représente de manière schématique l'architecture d'un équipement multi-pompes.
- La figure 2 représente l'architecture de commande d'un équipement multi-pompes.
- Les figures 3A à 3C représentent trois courbes de pompe de type Hauteur Manométrique-Débit appliquées pour le contrôle d'une pompe et illustrant un mode de contrôle de la hauteur manométrique qui est respectivement de type constant, proportionnel et quadratique.
- Les figures 4A à 4C représentent trois courbes de pompe de type HQ appliquées pour le contrôle d'une pompe et illustrant à la fois le principe de contrôle de l'invention en différence de pression, respectivement de type constant, proportionnel et quadratique et également le profil de courbe de hauteur manométrique qui en résulte.
- La figure 5 représente, de manière schématique, un diagramme de fonctionnement de l'invention, lors d'un contrôle de type constant.
- La figure 6 représente, de manière schématique, un diagramme de fonctionnement de l'invention, lors d'un contrôle de type quadratique.
- La figure 7 représente un diagramme de fonctionnement illustrant le principe de correction entre hauteur manométrique et différentiel de pression.

**Description détaillée d'au moins un mode de réalisation**

L'invention s'applique à un équipement multi-pompes 1 de fluide, comportant plusieurs pompes commandées. Un tel équipement multi-pompes est notamment employé pour le pompage d'un fluide par exemple dans des installations de type chauffage/ventilation/climatisation (HVAC) ou dans des installations de traitement d'eau.

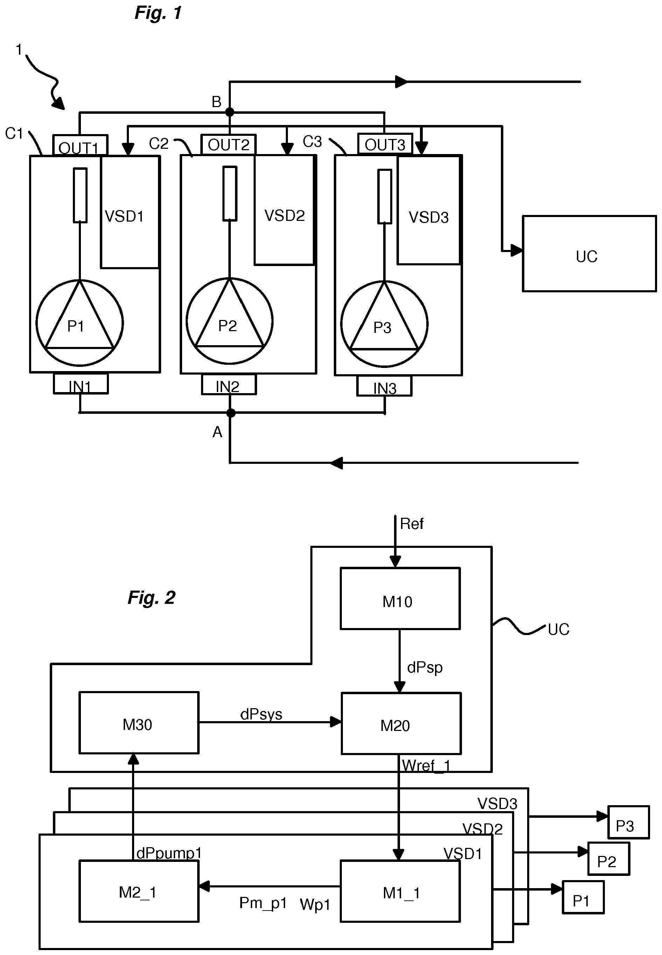

En référence à la figure 1, un équipement multi-pompes 1 comporte n cellules de pompage Ci, avec i allant de 1 à n, et n supérieur ou égal à 2, chaque cellule de pompage Ci comportant une entrée INi, une sortie OUTi et une pompe Pi positionnée entre l'entrée et la sortie pour pomper un fluide de l'entrée vers la sortie. Dans l'équipement 1, les n cellules de pompage Ci sont reliées en parallèle, c'est-à-dire que l'équipement comporte au moins un point de jonction d'entrée A sur lequel sont connectées les entrées de toutes les cellules de pompage et au moins un point de jonction de sortie B sur lequel sont connectées les sorties de toutes les cellules de pompage. L'équipement multi-pompes 1 est ainsi doté de n branches en parallèle, chaque branche correspondant à une cellule de pompage distincte.

Sur la figure 1, un équipement 1 à trois cellules de pompage C1, C2, C3 est représenté. Bien entendu, l'invention peut tout à fait s'appliquer à un équipement comportant au moins deux cellules de pompage.

Chaque cellule de pompage Ci comporte par ailleurs un moteur électrique, par exemple inclus dans la pompe, et commandé à vitesse variable par un variateur de vitesse VSDi, le variateur de vitesse faisant avantageusement partie de la cellule Ci. De manière connue, un variateur de vitesse commande un moteur électrique en lui appliquant des signaux de tension en sortie, déterminés par une boucle de contrôle recevant en entrée une ou plusieurs valeurs de consigne. La boucle de contrôle est mise en oeuvre par un module de contrôle exécuté par une unité de commande du variateur de vitesse.

En référence à la figure 2, l'architecture de commande d'une installation (par exemple de type HVAC) incluant un tel équipement multi-pompes 1 est par exemple la suivante :

- Un module de contrôle M10 de l'installation reçoit une ou plusieurs valeurs de consigne d'entrée Ref (par exemple une température de consigne) et détermine un différentiel de pression de consigne dPsp.

- Le module de contrôle M20 de l'équipement multi-pompes 1 détermine la stratégie de contrôle à appliquer aux cellules de pompage Ci de l'équipement et envoie une vitesse de consigne Wref_i au module de contrôle M1_i de la pompe de chaque cellule de pompage.

- La pompe Pi de chaque cellule de pompage Ci est commandée par son variateur de vitesse VSDi selon une boucle de contrôle exécutée par le module de contrôle M1 i de l'unité de commande du variateur de vitesse. Chaque module de contrôle M1_i détermine les tensions à appliquer en sortie pour commander la pompe Pi de la cellule Ci, en fonction notamment d'une consigne en vitesse individuelle appliquée en entrée.

- Un module de surveillance M2_i de l'unité de commande du variateur de vitesse VSDi de chaque cellule de pompage Ci récupère des données de fonctionnement de la pompe Pi en provenance du module de contrôle M1_i, ces données étant notamment la puissance mécanique Pm_pi estimée appliquée à la pompe et la vitesse Wpi estimée appliquée à la pompe Pi. Ces données sont avantageusement obtenues sans l'emploi de capteurs de vitesse.

- Le module de surveillance M2_i de chaque cellule de pompage Ci envoie à intervalles réguliers des données calculées vers un module de surveillance de l'équipement multi-pompes 1, ces données étant notamment le débit Qpumpi théorique sur la sortie de la cellule, la hauteur manométrique Hpumpi estimée pour obtenir ce débit, la différence de pression dPpumpi estimée entre l'entrée et la sortie de la cellule.

- Le module de surveillance M30 de l'équipement multi-pompes 1 envoie vers le module de contrôle M20 de l'équipement multi-pompes, un différentiel de pression estimé dPSys pour l'équipement multi-pompes.

- Le module de contrôle M20 de l'équipement multi-pompes 1 détermine la vitesse de consigne Wref_i à appliquer à chaque cellule de pompage de l'équipement en fonction du différentiel de pression estimé dPSys et du différentiel de pression de consigne dPsp reçus.

Le module de contrôle M20 de l'équipement multi-pompes et le module de surveillance M30 de l'équipement multi-pompes sont par exemple exécutés dans une unité centrale UC d'un automate programmable ou dans l'unité de commande d'un des variateurs de vitesse d'une cellule de pompage de l'équipement.

De même, le module de contrôle M10 de l'installation est par exemple exécuté dans une unité centrale UC d'un automate programmable, pouvant être identique à celle décrite ci-dessus, ou dans une autre unité de commande, telle que celle d'un des variateurs de vitesse d'une cellule de pompage de l'équipement.

Selon l'invention, les modules de contrôle M1_i et de surveillance M2_i des cellules de pompage et le module de contrôle M10 et de surveillance M20 de l'équipement 1 seront inclus dans un système de commande permettant la mise en oeuvre du procédé de commande de l'invention.

Sur la figure 2, on a représenté, de manière non limitative, le module de contrôle M10 de l'installation, le module de contrôle M20 de l'équipement multi-pompes et le module de surveillance M30 de l'équipement multi-pompes exécutés par l'unité centrale d'un automate programmable, celle-ci étant dissociée des unités de commande associés à chaque variateur de vitesse VSDi des cellules de pompage Ci.

De manière générale, le contrôle d'une pompe Pi est réalisé en ajustant sa hauteur manométrique (appelé "head" en anglais) au débit demandé. Pour cela, le variateur de vitesse se base sur des courbes de pompes préenregistrées. De manière connue, chaque pompe est définie par une première courbe caractéristique de pompe. Cette courbe illustre la relation existant entre la hauteur manométrique H de la pompe et son débit volumique Qpumpi à une vitesse donnée. La hauteur manométrique Hpumpi de la pompe s'exprime en mètre tandis que le débit volumique Qpumpi s'exprime par exemple en $m^3$/heure. Chaque pompe est également définie par une deuxième courbe caractéristique de pompe exprimant la relation entre la puissance mécanique fournie à la pompe et le débit Qpumpi en sortie de la pompe à une vitesse donnée.

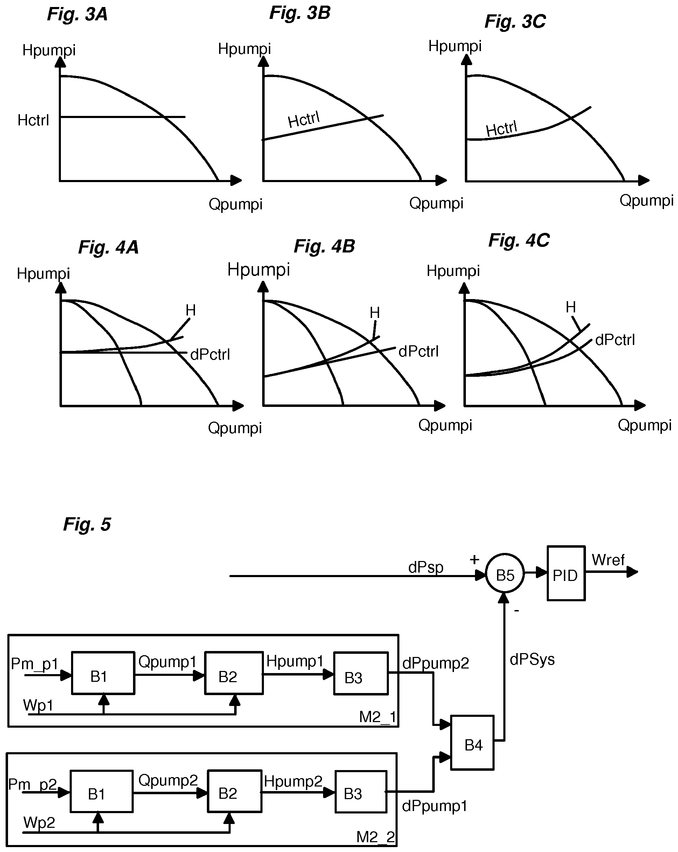

Pour la commande d'une seule pompe, il est connu de contrôler la hauteur manométrique de la pompe directement en suivant une courbe de contrôle Hctrl prédéfinie, cette courbe pouvant être constante (figure 3A), proportionnelle (figure 3B) ou de forme quadratique (figure 3C). Appliquer ce type de contrôle en se basant sur la hauteur manométrique n'est pas pertinent dans le cadre d'un équipement multi-pompes.

Le principe de l'invention repose donc sur l'application d'un contrôle en différence de pression à l'équipement multi-pompes, ce qui revient à appliquer virtuellement une correction à la hauteur manométrique de l'équipement. Cette solution permet de mieux tenir compte des pertes de charge présentes dans chaque cellule de pompage de l'équipement.

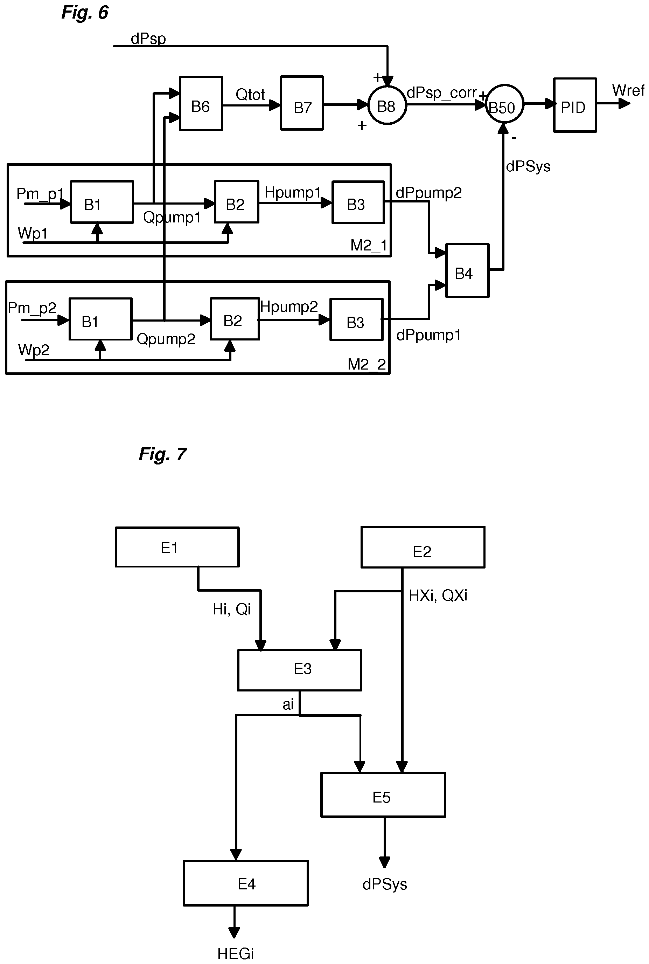

En référence aux figures 5 et 6, le principe de fonctionnement mis en oeuvre pour ce contrôle est décrit ci-dessous.

Dans chaque cellule de pompage Ci, le module de surveillance M2_i détermine un différentiel de pression dPi théorique de sa cellule de pompage Ci. Pour cela, le module de surveillance M2_i effectue les opérations suivantes :

- Il exécute un bloc d'estimation B1 du débit Qpumpi généré par la pompe Pi à partir de la puissance mécanique Pm_pi appliquée à la pompe et de la vitesse Wpi appliquée à la pompe, cette puissance mécanique et cette vitesse étant préférentiellement des données estimées et obtenues dans la boucle de contrôle de la pompe. Pour cela, il se base sur la courbe de pompe de type PQ définie ci-dessus à la vitesse de la pompe.

- A partir du débit Qpumpi estimé pour la pompe, il exécute un bloc d'estimation B2 de la hauteur manométrique Hpumpi à appliquer pour obtenir ce débit. Pour cela, il se base sur la courbe HQ définie ci-dessus à la vitesse de la pompe.

- Il exécute un bloc d'estimation de la différence de pression dPpumpi de la cellule de pompage Ci entre l'entrée et la sortie de la cellule, en appliquant une valeur de correction quadratique HEGi à la hauteur manométrique, cette correction tenant compte notamment des pertes de charge dans sa branche de cellule.

Ces trois opérations sont mises en oeuvre en parallèle par chaque module de surveillance M2_i des cellules de pompage Ci. La valeur de correction quadratique HEGi appliquée est distincte pour chaque cellule de pompage Ci. Nous verrons ci-dessous le principe de détermination de la valeur de correction quadratique HEGi à appliquer pour chaque cellule de pompage Ci.

Le module de surveillance M30 de l'équipement multi-pompes 1 est ensuite chargé de récupérer la valeur de différentiel de pression dPpumpi déterminée pour chaque cellule de pompage Ci.

Le module de surveillance M30 de l'équipement 1 exécute un bloc de détermination B4 d'un différentiel de pression pour l'équipement multi-pompes dans sa totalité. Ce différentiel de pression estimé de l'équipement correspond à la différence de pression estimée entre le point de jonction d'entrée A et le point de jonction de sortie B de l'équipement. Idéalement, le bloc d'estimation B4 applique la formule :

$$dP_{Sys} = dP_{pumpi}$$

En variante de réalisation, pour mieux tenir compte de certaines particularités de l'équipement, le bloc d'estimation B4 peut s'appuyer également sur l'expression suivante :

$$dP_{Sys} = \sum_{1}^{n} (dP_{pump_i} \cdot Q_{pump_i}) / \sum_{1}^{n} Q_{pump_i}$$

Le module de surveillance M30 de l'équipement injecte ensuite le différentiel de pression dPSys estimé dans le module de contrôle M20 de l'équipement 1, le module de contrôle M20 recevant également en entrée le différentiel de pression de consigne dPsp.

Selon le mode de contrôle employé, la boucle de contrôle mise en place par l'équipement diffère.

En référence à la figure 5, pour une correction d'un contrôle en différentiel de pression constant, le module de contrôle M20 opère de la manière suivante :

- Il exécute un bloc de comparaison B5 entre le différentiel de pression estimé dPSys pour l'équipement et le différentiel de pression de consigne dPsp, en vue de déterminer la différence entre les deux.

- Il injecte la différence déterminée dans un correcteur à action proportionnelle intégrale dérivée (PID) de manière à en déduire la vitesse de consigne Wref de l'équipement 1, pour faire converger le différentiel de pression de l'équipement vers le différentiel de pression de consigne.

En référence à la figure 6, pour une correction d'un contrôle en différentiel de pression quadratique, le module de contrôle M20 opère de la manière suivante :

- Il exécute un module de correction du différentiel de pression de consigne. Ce module de correction met en oeuvre un bloc d'estimation B6 du débit total pour l'équipement 1 à partir du débit estimé Qpumpi obtenu par chaque cellule de pompage Ci. Le débit total Qtot estimé est injecté dans un bloc de correction B7 appliquant une fonction de compensation des pertes de charge de l'équipement (FLC pour "Friction Loss Compensation"). La valeur de correction déterminée est ajoutée au différentiel de pression de consigne dPsp afin d'obtenir un différentiel de pression de consigne corrigé dPsp_corr (bloc B8).

- Il exécute un bloc de comparaison B50 entre le différentiel de pression estimé dPSys pour l'équipement et le différentiel de pression de consigne corrigé dPsp_corr, en vue de déterminer la différence entre les deux.

- Il injecte la différence déterminée dans un correcteur à action proportionnelle intégrale dérivée (PID) de manière à en déduire la vitesse de consigne Wref de l'équipement pour faire converger le différentiel de pression de l'équipement vers le différentiel de pression de consigne corrigé.

Dans les deux solutions définies ci-dessus, le module de contrôle M20 en vitesse de l'équipement se charge ensuite de déterminer les vitesses de consigne à appliquer à chaque cellule de pompage Ci et de les envoyer vers les modules de contrôle de chaque cellule de pompage en fonction de la vitesse de consigne globale Wref obtenue.

La figure 7 illustre le principe de détermination de la valeur de correction quadratique HEGi à appliquer dans chaque cellule de pompage Ci. Cette valeur de correction quadratique est déterminée de manière distincte pour chaque cellule de pompage Ci. La méthode de détermination est par exemple mise en oeuvre en dehors du fonctionnement normal de l'équipement, par exemple lors d'une étape d'apprentissage. Elle est par exemple mise en oeuvre au niveau d'un module d'apprentissage particulier associé à l'équipement multi-pompes et par exemple exécuté par l'unité centrale de l'automate programmable définie ci-dessus.

Le principe exposé ci-dessous tient compte du fait que l'équipement est stable et ne subit pas de variations de charge pour un débit donné. Les pertes dans les tuyaux et dans la charge seront considérées comme toujours identiques.

La première étape E1 consiste à exécuter un module de commande pour actionner chaque pompe de l'équipement multi-pompes l'une après l'autre, chaque pompe étant commandée à un même débit de consigne.

Pour chaque pompe actionnée, le module d'apprentissage récupère les données de débit et de hauteur manométrique estimées par le module de surveillance de chaque cellule de pompage.

Pour cette première étape E1, on a ainsi :

$$H_i = H_{pumpi}$$

$$Q_i = Q_{pumpi} \approx Q_{ref}$$

$$H_i = dP_{Sys} + Hfl_i(Q_i^2) \qquad (1)$$

Avec $Hfl_i(Q^2) = a_i.Q^2$

Avec :

- Hi la hauteur manométrique estimée pour chaque cellule de pompage Ci de l'équipement ;
- Qi le débit estimé généré par chaque cellule de pompage Ci de l'équipement;
- Qref le débit de consigne demandé en entrée de chaque la hauteur manométrique équivalente aux pertes de charge de la cellule de pompage Ci de l'équipement ;
- dPsys, le différentiel de pression de l'équipement ;
- $a_i$ un coefficient de compensation des pertes de charge, qui sera explicité ci-dessous.

La deuxième étape E2 consiste à exécuter un module de commande pour actionner les pompes de l'équipement deux par deux, avec une consigne en débit total identique au débit de consigne appliqué à chaque pompe lors de la première étape.

Pour chaque pompe, le module d'apprentissage récupère les données de débit et de hauteur manométrique estimées par le module de surveillance de chaque cellule de pompage.

Pour cette deuxième étape E2, on a ainsi :

$$HX_i = H_{pumpi}$$

$$QX_i = Q_{pumpi} \text{ avec } \sum QX_i \approx Q_{ref}$$

$$HX_i = dP_{Sys} + Hfl_i(QX_i^2) \qquad (2)$$

avec $Hfl_i(Q^2) = a_i.Q^2$

Avec :

- HXi la hauteur manométrique estimée pour chaque cellule de pompage i de l'équipement lors de la deuxième étape ;
- QXi le débit estimé généré par chaque cellule de pompage i de l'équipement lors de cette deuxième étape ;

Dans une troisième étape E3, le module d'apprentissage détermine le coefficient $a_i$ évoqué ci-dessus et représentatif des pertes de charge dans chaque cellule de pompage. Pour cela, le module d'apprentissage applique le raisonnement suivant :

Des relations (1) et (2), ci-dessus, on déduit l'expression du coefficient $a_i$:

$$H_i - HX_i = Hfl_i(Q_i^2) - Hfl_i(QX_i^2) = Hfl_i(Q_i^2 - QX_i^2)$$

Soit :

$$a_i = \frac{H_i - HX_i}{Q_i^2 - QX_i^2} \qquad (3)$$

A partir du coefficient $a_i$ obtenu à l'issue de la troisième étape E3, le module d'apprentissage peut ensuite calculer, dans une quatrième étape E4, la correction HEGi à appliquer pour chaque cellule de pompage Ci :

$$dP_{Pump} = H_{pump} + HEG \times H_{BEP}.\frac{Q_{Pump}^2}{Q_{BEP}^2}$$

$$dP_{Pump} = H_{Pump} + a.Q_{Pump}^2$$

Avec : $a = HEG \times \frac{H_{BEP}}{Q_{BEP}^2}$

A partir de la relation (3), on obtient :

$$a_i = HEG_i \times \frac{H_{BEP}}{Q_{BEP}^2} = \frac{H_i - HX_i}{Q_i^2 - QX_i^2}$$

Soit :

$$HEG_i = \frac{H_i - HX_i}{H_{BEP}} \times \frac{Q_{BEP}^2}{Q_i^2 - QX_i^2}$$

Avec $H_{BEP}$ et $Q_{BEP}$ correspondant respectivement à la hauteur manométrique et au débit de l'équipement au point de rendement maximal ("Best Efficiency Point").

Puis, dans une cinquième étape E5, le module d'apprentissage peut déterminer le différentiel de pression de l'équipement à partir du raisonnement suivant :

Des relations (2) et (3) ci-dessus, on déduit que :

$$dP_{Sys} = HX_i - Hfl_i(QX_i^2) = HX_i - a_i \times QX_i^2 = HX_i - \frac{H_i - HX_i}{Q_i^2 - QX_i^2} \times QX_i^2$$

$$\text{Soit : } dP_{Sys} = \frac{HX_i.Q_i^2 - H_i.QX_i^2}{Q_i^2 - QX_i^2} \qquad (4)$$

En variante de réalisation, il est également possible pour le module d'apprentissage de déterminer la correction HEGi pour chaque cellule de pompage de la manière suivante, à partir des pertes de charge "théoriques" à un débit donné, par exemple au débit $Q_{BEP}$ correspondant au débit pris au point de rendement maximal :

$$P_{Pump} = H_{Pump} + HEG \times H_{BEP}.\frac{Q_{Pump}^2}{Q_{BEP}^2}$$

Et comme : $Hfl_i(Q_{BEP})$ correspond aux pertes de charge au débit $Q_{BEP}$, on obtient :

$$HEG_i = \frac{Hfl_i(Q_{BEP})}{H_{BEP}}$$

L'invention présente ainsi de nombreux avantages. Elle permet un contrôle centralisé, sans avoir à tenir compte de la commande individuelle des pompes dans l'équipement. Le contrôle est ainsi transparent quelle que soit la stratégie de commande adoptée. En outre, la solution de l'invention permet de s'assurer du contrôle de différentiel de pression de l'équipement en tenant compte des pertes de charge dans les différentes branches de l'équipement.

Les figures 4A à 4C permettent d'illustrer la correction appliquée grâce au contrôle en différentiel de pression dPctrl et la hauteur manométrique obtenue à partir de ce contrôle.

**Revendications**

1. Procédé de commande d'un équipement multi-pompes (1) destiné à pomper un fluide, ledit équipement comportant n cellules de pompage (Ci) reliées en parallèle, avec n supérieur ou égal à 2, et comprenant chacune une entrée, une sortie et une pompe (Pi) connectée entre l'entrée et la sortie, au moins un point de jonction d'entrée (A) relié à chaque entrée des cellules de pompage et au moins un point de jonction de sortie (B) relié à chaque sortie des cellules de pompage, ledit équipement étant contrôlé à partir d'une consigne en différentiel de pression (dPsp) entre ledit point de jonction d'entrée et ledit point de jonction de sortie, ledit procédé étant **caractérisé en ce qu'**il consiste à :

   - Déterminer par estimation un différentiel de pression estimé (dPpumpi) généré par chaque cellule de pompage (Ci) entre son entrée et sa sortie en tenant compte d'une valeur de correction (HEGi) représentative des pertes de charge dans la cellule de pompage,
   - Déterminer par estimation un différentiel de pression (dPSys) de l'équipement multi-pompes à partir des différentiels de pression estimés pour chaque cellule de pompage,
   - Comparer ledit différentiel de pression (dPSys) estimé de l'équipement multi-pompes audit différentiel de pression (dPsp) de consigne en vue de contrôler une vitesse de référence (Wref) à injecter dans une boucle de contrôle de l'équipement multi-pompes.

2. Procédé selon la revendication 1, **caractérisé en ce qu'**il comporte, pour chaque cellule de pompage (Ci), une étape de détermination du débit (Qpumpi) estimé de la pompe à partir d'une puissance mécanique (Pm_pi) estimée de la pompe et d'une courbe de pompe de type puissance mécanique - débit (PQ) à une vitesse (Wpi) estimée de la pompe.

3. Procédé selon la revendication 2, **caractérisé en ce qu'**il comporte, pour chaque cellule de pompage (Ci), une étape de détermination d'une hauteur manométrique (Hpumpi) estimée à partir du débit estimé et d'une courbe de pompe de type hauteur manométrique - débit (HQ) à une vitesse estimée de la pompe.

4. Procédé selon la revendication 3, **caractérisé en ce que**, pour chaque cellule de pompage (Ci), le différentiel de pression (dPpumpi) estimé de la cellule de pompage est déterminé à partir de la hauteur manométrique (Hpumpi) estimée et de ladite valeur de correction (HEGi).

5. Procédé selon l'une des revendications précédentes, **caractérisé en ce qu'**il comporte une étape de correction du différentiel de pression (dPsp) de consigne à l'aide d'un coefficient de compensation quadratique.

6. Procédé selon l'une des revendications 1 à 5, **caractérisé en ce qu'**il comporte une étape initiale d'apprentissage mise en oeuvre pour déterminer la valeur de correction (HEGi), représentative des pertes de charge dans la cellule de pompage, ladite étape initiale d'apprentissage consistant à :

   - Actionner chaque pompe (Pi) de l'équipement de manière individuelle à un débit de consigne individuel déterminé,
   - Actionner au moins deux par deux, des pompes de l'équipement à un débit de consigne total identique audit débit de consigne individuel,
   - Déterminer un coefficient de compensation des pertes de charge ($a_i$) pour chaque cellule de pompage,
   - Déterminer la valeur de correction à partir du coefficient de compensation des pertes de charge ($a_i$).

7. Procédé selon l'une des revendications 1 à 5, **caractérisé en ce qu'**il comporte une étape de détermination de la valeur de correction (HEGi) à partir de la hauteur manométrique équivalente aux pertes de charge de la cellule de pompage de l'équipement à un débit donné.

8. Système de commande d'un équipement multi-pompes (1) destiné à pomper un fluide, ledit équipement comportant n cellules de pompage (Ci) reliées en parallèle, avec n supérieur ou égal à 2, et comprenant chacune une entrée, une sortie et une pompe (Pi) connectée entre l'entrée et la sortie, au moins un point de jonction d'entrée (A) relié à chaque entrée des cellules de pompage et au moins un point de jonction de sortie (B) relié à chaque sortie des cellules de pompage, ledit équipement étant contrôlé à partir d'une consigne en différentiel de pression (dPsp) entre ledit point de jonction d'entrée et ledit point de jonction de sortie, ledit système étant **caractérisé en ce qu'**il comporte :

- Un module de détermination par estimation d'un différentiel de pression estimé (dPpumpi) généré par chaque cellule de pompage (Ci) entre son entrée et sa sortie en tenant compte d'une valeur de correction (HEGi) représentative des pertes de charge dans la cellule de pompage,
- Un module de détermination d'un différentiel de pression (dPSys) de l'équipement multi-pompes à partir des différentiels de pression estimés pour chaque cellule de pompage,
- Un module de comparaison dudit différentiel de pression (dPSys) estimé de l'équipement multi-pompes audit différentiel de pression (dPsp) de consigne en vue de contrôler une vitesse de référence (Wref) à injecter dans une boucle de contrôle de l'équipement multi-pompes.

9. Système selon la revendication 8, **caractérisé en ce qu'**il comporte, pour chaque cellule de pompage (Ci), un bloc d'estimation (B1) du débit (Qpumpi) estimé de la pompe à partir d'une puissance mécanique (Pm_pi) estimée de la pompe et d'une courbe de pompe de type puissance mécanique - débit (PQ) à une vitesse (Wpi) estimée de la pompe.

10. Système selon la revendication 9, **caractérisé en ce qu'**il comporte, pour chaque cellule de pompage (Ci), un bloc d'estimation (B2) d'une hauteur manométrique (Hpumpi) estimée à partir du débit estimé et d'une courbe de pompe de type hauteur manométrique - débit (HQ) à une vitesse estimée de la pompe.

11. Système selon la revendication 10, **caractérisé en ce que**, pour chaque cellule de pompage (Ci), il comporte un bloc d'estimation (B3) du différentiel de pression (dPpumpi) estimé de la cellule de pompage est déterminé à partir de la hauteur manométrique (Hpumpi) estimée et de ladite valeur de correction (HEGi).

12. Système selon l'une des revendications 8 à 10, **caractérisé en ce qu'**il comporte un bloc de correction (B7) du différentiel de pression (dPsp) de consigne à l'aide d'un coefficient de compensation quadratique.

13. Système selon l'une des revendications 8 à 12, **caractérisé en ce qu'**il comporte un module d'apprentissage exécuté pour déterminer la valeur de correction (HEGi), ledit module d'apprentissage comportant :

- Un module de commande de chaque pompe (Pi) de l'équipement de manière individuelle à un débit de consigne individuel déterminé,
- Un module de commande, au moins deux par deux, des pompes de l'équipement à un débit de consigne total identique audit débit de consigne individuel,
- Un module de détermination d'un coefficient de compensation des pertes de charge ($a_i$) pour chaque cellule de pompage,
- Un module de détermination de la valeur de correction à partir du coefficient de compensation des pertes de charge ($a_i$).

14. Système selon l'une des revendications 8 à 12, **caractérisé en ce qu'**il comporte un module de détermination de la valeur de correction (HEGi) à partir de la hauteur manométrique équivalente aux pertes de charge de la cellule de pompage de l'équipement à un débit donné.

**Patentansprüche**

1. Steuerverfahren einer Mehrfachpumpenanordnung (1), die dazu bestimmt ist, ein Fluid zu pumpen, wobei die Anordnung n Pumpzellen (Ci) aufweist, die parallel geschaltet sind, wobei n größer als oder gleich 2 ist, und die jeweils einen Einlass, einen Auslass und eine Pumpe (Pi), die zwischen dem Einlass und dem Auslass angeschlossen ist, mindestens einen Einlass-Verbindungspunkt (A), der mit jedem Einlass der Pumpzellen verbunden ist, und mindestens einen Auslass-Verbindungspunkt (B), der mit jedem Auslass der Pumpenzellen verbunden ist, aufweisen, wobei die Anordnung ausgehend von einem Druckdifferenz-Sollwert (dPsp) zwischen dem Einlass-Verbindungspunkt und dem Auslass-Verbindungspunkt gesteuert wird, wobei das Verfahren **dadurch gekennzeichnet ist, dass** es darin besteht:

- durch Schätzen eine geschätzte Druckdifferenz (dPpumpi), die von jeder Pumpzelle (Ci) zwischen ihrem Einlass und ihrem Auslass erzeugt wird, unter Berücksichtigung eines Korrekturwerts (HEGi), der für die Druckverluste in der Pumpzelle repräsentativ ist, zu bestimmen,
- durch Schätzen eine Druckdifferenz (dPSys) der Mehrfachpumpenanordnung ausgehend von den geschätzten Druckdifferenzen für jede Pumpzelle zu bestimmen,
- die geschätzte Druckdifferenz (dPSys) der Mehrfachpumpenanordnung mit dem Druckdifferenz-Sollwert (dPsp) zu vergleichen, um eine Referenzdrehzahl (Wref) zu steuern, die in einen Regelkreis der Mehrfachpumpenanordnung zu injizieren ist.

2. Verfahren nach Anspruch 1, **dadurch gekennzeichnet, dass** es für jede Pumpzelle (Ci) einen Schritt des Bestimmens der geschätzten Fördermenge (Qpumpi) der Pumpe ausgehend von einer geschätzten mechanischen Leistung (Pm_pi) der Pumpe und von einer Pumpenkurve des Typs mechanische Leistung - Fördermenge (PQ) bei einer geschätzten Drehzahl (Wpi) der Pumpe aufweist.

3. Verfahren nach Anspruch 2, **dadurch gekennzeichnet, dass** es für jede Pumpzelle (Ci) einen Schritt des Bestimmens einer geschätzten Förderhöhe (Hpumpi) ausgehend von einer geschätzten Fördermenge und von einer Pumpenkurve des Typs Förderhöhe - Fördermenge (HQ) bei einer geschätzten Drehzahl der Pumpe aufweist.

4. Verfahren nach Anspruch 3, **dadurch gekennzeichnet, dass** für jede Pumpzelle (Ci) die geschätzte Druckdifferenz (dPpumpi) der Pumpzelle ausgehend von der geschätzten Förderhöhe (Hpumpi) und dem Korrekturwert (HEGi) bestimmt wird.

5. Verfahren nach einem der vorhergehenden Ansprüche, **dadurch gekennzeichnet, dass** es einen Schritt des Korrigierens des Druckdifferenz-Sollwerts (dPsp) mit Hilfe von einem quadratischen Ausgleichskoeffizienten aufweist.

6. Verfahren nach einem der Ansprüche 1 bis 5, **dadurch gekennzeichnet, dass** es einen anfänglichen Lernschritt aufweist, der umgesetzt wird, um den Korrekturwert (HEGi) zu bestimmen, der für die Druckverluste in der Pumpzelle repräsentativ ist, wobei der anfängliche Lernschritt darin besteht:

- jede Pumpe (Pi) der Anlage einzeln bei einer bestimmten individuellen Sollfördermenge zu betätigen,
- mindestens zwei der Pumpen der Anlage bei einer Gesamtsollfördermenge zu betätigen, die gleich der individuellen Sollfördermenge ist,
- einen Ausgleichskoeffizienten der Druckverluste ($a_i$) für jede Pumpzelle zu bestimmen,
- den Korrekturwert ausgehend von dem Ausgleichskoeffizienten der Druckverluste ($a_i$) zu bestimmen.

7. Verfahren nach einem der Ansprüche 1 bis 5, **dadurch gekennzeichnet, dass** es einen Schritt des Bestimmens des Korrekturwerts (HEGi) ausgehend von der Förderhöhe aufweist, die mit den Druckverlusten der Pumpzelle der Anlage bei einer bestimmten Fördermenge äquivalent ist.

8. Steuersystem einer Mehrfachpumpenanordnung (1), die dazu bestimmt ist, ein Fluid zu pumpen, wobei die Anordnung n Pumpzellen (Ci) aufweist, die parallel geschaltet sind, wobei n größer als oder gleich 2 ist, und die jeweils einen Einlass, einen Auslass und eine Pumpe (Pi), die zwischen dem Einlass und dem Auslass angeschlossen ist, mindestens einen Einlass-Verbindungspunkt (A), der mit jedem Einlass der Pumpzellen verbunden ist, und mindestens einen Auslass-Verbindungspunkt (B), der mit jedem Auslass der Pumpenzellen verbunden ist, aufweisen, wobei die Anordnung ausgehend von einem Druckdifferenz-Sollwert (dPsp) zwischen dem Einlass-Verbindungspunkt und dem Auslass-Verbindungspunkt gesteuert wird, wobei das System **dadurch gekennzeichnet ist, dass** es aufweist:

- ein Modul zum Bestimmen durch Schätzen einer geschätzten Druckdifferenz (dPpumpi), die von jeder Pumpzelle (Ci) zwischen ihrem Einlass und ihrem Auslass erzeugt wird, unter Berücksichtigung eines Korrekturwerts (HEGi), der für die Druckverluste in der Pumpzelle repräsentativ ist,
- ein Modul zum Bestimmen einer Druckdifferenz (dPSys) der Mehrfachpumpenanordnung ausgehend von den geschätzten Druckdifferenzen für jede Pumpzelle,

- ein Modul zum Vergleichen der geschätzten Druckdifferenz (dPSys) der Mehrfachpumpenanordnung mit dem Druckdifferenz-Sollwert (dPsp), um eine Referenzdrehzahl (Wref) zu steuern, die in einen Regelkreis der Mehrfachpumpenanordnung zu injizieren ist.

9. System nach Anspruch 8, **dadurch gekennzeichnet, dass** es für jede Pumpzelle (Ci) einen Schätzungsblock (B1) der geschätzten Fördermenge (Qpumpi) der Pumpe ausgehend von einer geschätzten mechanischen Leistung (Pm_pi) der Pumpe und von einer Pumpenkurve des Typs mechanische Leistung - Fördermenge (PQ) bei einer geschätzten Drehzahl (Wpi) der Pumpe aufweist.

10. System nach Anspruch 9, **dadurch gekennzeichnet, dass** es für jede Pumpzelle (Ci) einen Schätzungsblock (B2) einer geschätzten Förderhöhe (Hpumpi) ausgehend von einer geschätzten Fördermenge und von einer Pumpenkurve des Typs Förderhöhe - Fördermenge (HQ) bei einer geschätzten Drehzahl der Pumpe aufweist.

11. System nach Anspruch 10, **dadurch gekennzeichnet, dass** es für jede Pumpzelle (Ci) einen Schätzungsblock (B3) der geschätzten Druckdifferenz (dPpumpi) der Pumpzelle aufweist, ausgehend von der geschätzten Förderhöhe (Hpumpi) und dem Korrekturwert (HEGi) bestimmt.

12. System nach einem der Ansprüche 8 bis 10, **dadurch gekennzeichnet, dass** es einen Korrekturblock (B7) des Druckdifferenz-Sollwerts (dPsp) mit Hilfe von einem quadratischen Ausgleichskoeffizienten aufweist.

13. System nach einem der Ansprüche 8 bis 12, **dadurch gekennzeichnet, dass** es ein Lernmodul aufweist, das ausgeführt wird, um den Korrekturwert (HEGi) zu bestimmen, wobei das Lernmodul aufweist:

- ein Modul, um jede Pumpe (Pi) der Anlage einzeln bei einer bestimmten individuellen Sollfördermenge zu steuern,
- ein Modul, um mindestens zwei der Pumpen der Anlage bei einer Gesamtsollfördermenge zu steuern, die gleich der individuellen Sollfördermenge ist,
- ein Modul zum Bestimmen eines Ausgleichskoeffizienten der Druckverluste ($a_i$) für jede Pumpzelle,
- ein Modul zum Bestimmen des Korrekturwerts ausgehend von dem Ausgleichskoeffizienten der Druckverluste ($a_i$).

14. System nach einem der Ansprüche 8 bis 12, **dadurch gekennzeichnet, dass** es ein Modul zum Bestimmen des Korrekturwerts (HEGi) ausgehend von der Förderhöhe aufweist, die mit den Druckverlusten der Pumpzelle der Anlage bei einer bestimmten Fördermenge äquivalent ist.

## Claims

1. Method for controlling a multipump system (1) designed to pump a fluid, said system including n pumping cells (Ci) connected in parallel, with n greater than or equal to 2, and each comprising an inlet, an outlet and a pump (Pi) connected between the inlet and the outlet, at least one inlet junction point (A) connected to each inlet of the pumping cells and at least one outlet junction point (B) connected to each outlet of the pumping cells, said system being controlled in accordance with a reference pressure difference (dPsp) between said inlet junction point and said outlet junction point, said method being **characterized in that** it consists in:

- Determining by estimation an estimated pressure difference (dPpumpi) generated by each pumping cell (Ci) between its inlet and its outlet taking account of a correction value (HEGi) representing the head losses in the pumping cell,
- Determining by estimation a pressure difference (dPSys) of the multipump system from the pressure differences estimated for each pumping cell,
- Comparing said multipump system estimated pressure difference (dPSys) with said reference pressure difference (dPsp) in order to control a reference speed (Wref) to be injected into a control loop of the multipump system.

2. Method according to Claim 1, **characterized in that** it includes, for each pumping cell (Ci), a step of determination of the estimated flow rate (Qpumpi) of the pump from an estimated mechanical power (Pm_pi) of the pump and a mechanical power - flow rate (PQ) type pump curve at an estimated speed (Wpi) of the pump.

3. Method according to Claim 2, **characterized in that** it includes, for each pumping cell (Ci), a steep of determination of an estimated manometric head (Hpumpi) from the estimated flow rate and a manometric head - flow rate (HQ) type pump curve at an estimated speed of the pump.

4. Method according to Claim 3, **characterized in that**, for each pumping cell (Ci), the estimated pressure difference (dPpumpi) of the pumping cell is determined from the estimated manometric head (Hpumpi) and said correction value (HEGi).

5. Method according to any one of the preceding claims, **characterized in that** it includes a step of correction of the reference pressure difference (dPsp) using a quadratic compensation coefficient.

6. Method according to any one of Claims 1 to 5, **characterized in that** it includes an initial learning step executed to determine the correction value (HEGi) representing the head losses in the pumping cell, said initial learning step consisting in:

   - Actuating each pump (Pi) of the system individually at a particular reference individual flow rate,
   - Actuating pumps of the system at least two by two at a reference total flow rate identical to said reference individual flow rate,
   - Determining a head loss compensation coefficient ($a_i$) for each pumping cell,
   - Determining the correction value from the head loss compensation coefficient ($a_i$).

7. Method according to any one of Claims 1 to 5, **characterized in that** it includes a step of determination of the correction value (HEGi) from the manometric head equivalent to the head losses of the pumping cell of the system at a given flow rate.

8. System for controlling a multipump system (1) designed to pump a fluid, said system including n pumping cells (Ci) connected in parallel, with n greater than or equal to 2, and each comprising an inlet, an outlet and a pump (Pi) connected between the inlet and the outlet, at least one inlet junction point (A) connected to each inlet of the pumping cells and at least one outlet junction point (B) connected to each outlet of the pumping cells, said system being controlled in accordance with a reference pressure difference (dPsp) between said inlet junction point and said outlet junction point, said system being **characterized in that** it includes:

   - A module for determination by estimation of an estimated pressure difference (dPpumpi) generated by each pumping cell (Ci) between its inlet and its outlet taking account of a correction value (HEGi) representing the head losses in the pumping cell,
   - A module for determination of a pressure difference (dPSys) of the multipump system from the pressure difference estimated for each pumping cell,
   - A module for comparing said estimated pressure difference (dPSys) of the multipump system to said reference pressure difference (dPsp) in order to control injection of a reference speed (Wref) into a control loop of the multipump system.

9. System according to Claim 8, **characterized in that** it includes, for each pumping cell (Ci), a block (B1) for estimating the estimated flow rate (Qpumpi) of the pump from an estimated mechanical power (Pm_pi) of the pump and a mechanical power - flow rate (PQ) type pump curve at an estimated speed (Wpi) of the pump.

10. System according to Claim 9, **characterized in that** it includes, for each pumping cell (Ci), a block (B2) for estimating an estimated manometric head (Hpumpi) from the estimated flow rate and a manometric head - flow rate (HQ) type pump curve at an estimated speed of the pump.

11. System according to Claim 10, **characterized in that**, for each pumping cell (Ci), it includes a block (B3) for estimating the estimated pressure difference (dPpumpi) of the pumping cell determined from the estimated manometric head (Hpumpi) and said correction value (HEGi).

12. System according to any one of Claims 8 to 10, **characterized in that** it includes a block (B7) for correcting the reference pressure difference (dPsp) using a quadratic compensation coefficient.

13. System according to any one of Claims 8 to 12, **characterized in that** it includes a learning module executed to determine the correction value (HEGi), said learning module including:

- A module for controlling each pump (Pi) of the system individually in accordance with a particular reference individual flow rate,
- A module for controlling the pumps of the system at least two by two in accordance with a reference total flow rate identical to said reference individual flow rate,
- A module for determining a head loss compensation coefficient ($a_i$) for each pumping cell,
- A module for determining the correction value from the head loss compensation coefficient ($a_i$).

14. System according to any one of Claims 8 to 12, **characterized in that** it includes a module for determining the correction value (HEGi) from the manometric head equivalent to the head losses of the pumping cell of the system at a given flow rate.

**Fig. 1**

**Fig. 2**

*Fig. 3A*

*Fig. 3B*

*Fig. 3C*

*Fig. 4A*

*Fig. 4B*

*Fig. 4C*

*Fig. 5*

*Fig. 6*

*Fig. 7*

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0735273 A1
- WO 2015105832 A1

- EP 2743507 A1